# EUROPEAN PATENT APPLICATION

(11) **EP 2 226 958 A1**
(43) Date of publication of application: **08.09.2010**
(21) Application number: 09154328.0
(22) Date of filing: 04.03.2009
(51) Int. Cl.: H04L 1/16

(54) **Wireless sensor networks with data reception acknowledgement**

(71) Applicant: Fujitsu Limited, Kawasaki-shi, Kanagawa 211-8588 (JP)
(72) Inventor: Abedi, Saied, Reading Berkshire RG1 4LS (GB); Chebbo, Hind, Uxbridge Middlesex UB8 3SY (GB)
(74) Representative: Stebbing, Timothy Charles

(57) **Abstract**

A method for monitoring a living body or other entity using a body area network of devices (10, 11-1, 11-2), each of the devices arranged to perform a data transfer with another device in the network by sequentially receiving or transmitting frames of data, and operable to acknowledge receipt of at least one frame from the other device by sending an acknowledgement frame. The method includes defining a plurality of acknowledgement frames of different types including an immediate acknowledgement frame (Immediate Ack) to be sent upon receipt of each individual frame (Data 1, ..., Data n) of a data transfer, and a delayed acknowledgement frame (Delayed Ack) to be sent only after completion of the data transfer. Some parameter of the living body is monitored using one or more of the devices which is equipped with a sensor, and the type of acknowledgement frame to be used for acknowledging a data transfer from or to those devices is selected in dependence upon whether or not the parameter is in an emergency condition. The method may be applied, for example, to monitoring of patients in a hospital using MBANs operating in accordance with IEEE 802,15.6.

## Description

The present invention relates to wireless sensor networks and particularly, but not necessarily exclusively, to body area networks including wirelessly-communicating sensors disposed on or around, or implanted in, a human or animal body.

Wireless sensor networks of various kinds have been proposed recently. In particular, the so-called Body Area Network or BAN is an example of wireless personal area networks (WPANs), used to convey information over relatively short distances. Unlike wireless local area networks (WLANs), connections effected via WPANs involve little or no infrastructure. This feature allows small, power-efficient, inexpensive solutions to be implemented for a wide range of devices. Of particular interest is the possibility of the medical BAN (MBAN) in which sensors are used to monitor the status of a patient. A BAN employing mainly sensors for feeding sensed data to a data sink is an example of a wireless sensor network (WSN); however, more active devices, such as actuators, may be also be included in a MBAN.

Standard IEEE 802.15.4 defines the physical layer (PHY) and medium access control (MAC) sublayer specifications for low data-rate WPANs. IEEE 802.15.4 has some similarities with a standard for higher data-rate WPANs, IEEE 802.15.3. The documents IEEE Std 802.15.4-2006 and IEEE Std 802.15.3-2003 are hereby incorporated by reference in their entirety.

WPANs of the type envisaged in IEEE 802.15.4 are suitable for applications such as industrial monitoring, but do not offer the kind of data reliability required for MBANs.

In medical applications, there is a requirement to reduce the costs associated with human labour while increasing the reliability and process automation and reducing human error. Sensors can provide the required intelligence, and already are widely employed in medical equipment. This includes hospital recuperative care, home care, intensive care units and advanced surgical procedures. There are many different types of sensors employed for medical applications, including external sensors for pulse, temperature etc., sensors which come in contact with body fluids, sensors used in catheters (through incision), sensors for external applications, disposable skin patches with wireless sensors, and implantable sensors.

A WPAN of sensors around a patient in a hospital or medical ward could provide multiple clinical benefits including patient mobility, monitoring flexibility, extension of monitoring into care areas that are currently unmonitored, reduced clinical errors and reduced overall monitoring costs. Body worn sensors may include various sensor types on a single patient body. They require a capability to be applied or removed quickly from the patient's body.

On an individual basis, such sensors may have bit rates of as low as 1-2 kbps per patient and on an aggregate basis they may require a 10 kbps bit rate. A range of as little as 1 metre may be adequate. However, medical WSN applications are mission critical applications in the clinical environment. Robust wireless links for bounded data loss and bounded latency, capacity for patient and sensor density, coexistence with other radios, battery life for days of continuous operations and small form factors for body worn devices, are among the requirements for medical WSNs or MBANs. These requirements can be satisfied through utilization of techniques such as diversity and error control techniques in the time and frequency domain, including Forward Error Correction (FEC) and Adaptive Repeat reQuest (ARQ), low duty cycle TDMA for sensor information rate, and more efficient small antennas.

Efforts are therefore in progress to define a further standard IEEE802.15.6 which aims to define the properties of Body Area Networks, particularly for medical applications. One of the key requirements of IEEE802.15.6 is high reliability for medical applications, one aspect of which concerns the sending of acknowledgements of received data (including commands). This is even more important for emergency situations where the life of the patient depends on the reliability of wireless links in medical WSN applications. Existing standards such as IEEE802.15.4 have been designed for commercial application with no consideration of such emergency life saving scenarios.

In particular, there is a need to address the issue of ensuring timely acknowledgement of communications between coordinators and network devices such as sensors involved in such an emergency situation.

According to a first aspect of the present invention, there is provided a wireless device used as a sensor in a wireless sensor network for monitoring an entity, including:
transmission means arranged to perform a data transfer with another device in the network by sequentially receiving or transmitting one or more frames, and operable to acknowledge receipt of at least one frame from the other device by sending an acknowledgement frame; and
emergency recognising means for recognising the existence of an emergency condition with respect to the sensor; wherein
the transmission means is arranged to send the acknowledgement frame by selecting one of a plurality of frame types including an immediate acknowledgement frame; and the emergency recognising means, upon recognising the emergency state, is arranged to cause the transmission means to select the immediate acknowledgement frame.

According to a second aspect of the present invention, there is provided a wireless device used as a coordinator in a network of sensors for monitoring an entity, including:
transmission means arranged to perform a data transfer with a sensor in the network by sequentially receiving or transmitting one or more frames, and operable to acknowledge receipt of at least one frame from the sensor by sending an acknowledgement frame; and
emergency recognising means for recognising the existence of an emergency condition with respect to the sensor; wherein
the transmission means is arranged to send the acknowledgement frame by selecting one of a plurality of frame types including an immediate acknowledgement frame; and the emergency recognising means, upon recognising the emergency state, is arranged to cause the transmission means to select the immediate acknowledgement frame.

In both cases above, the entity being monitored may be a living body (human or animal) but could also be an industrial entity such as a factory or installation. An emergency condition with respect to the wireless device refers to the parameter for which data is being sensed or recorded using the device; for example, a life parameter in the case of an MBAN.

In either case, preferably, the device is arranged upon selection of the immediate acknowledgement frame, to send the immediate acknowledgement frame directly after receipt of each single frame from the other device or the sensor as the case may be. Thus, an immediate acknowledgement frame (immediate ACK) is a frame sent after each successful receipt of a frame from another, source, device. The immediate ACK is selected when either the source or destination is in emergency, but is not reserved exclusively for this situation. The sending of the immediate ACK may be made conditional on the presence of an acknowledgement request in the frame received from the source device.

The recognising means may be responsive to an emergency state determined by the wireless device itself (e.g. by the recognising means); alternatively, the recognising means is responsive to an emergency state determined outside the wireless device and notified to the wireless device. The latter alternative may apply, for example, where a wireless device used as a sensor has insufficient capabilities to determine its own emergency status.

Preferably, the plurality of frame types further include a delayed acknowledgement frame and the transmission means is arranged to select the delayed acknowledgement frame when the sensor is not in the emergency state, the delayed acknowledgement frame being sent only after completion of the data transfer from the other device or the sensor, and includes a payload in the form of a number of frames received. Thus in contrast to the immediate acknowledgement frame, the delayed ACK is sent only once and indicates how many frames were successfully received. As a third type of acknowledgement, a simple acknowledgement similar to a delayed ACK but having no payload, may also be employed in a non-emergency state.

The above devices are preferably used in a system which defines each frame with a frame control field, and the immediate acknowledgement frame is selected to define the acknowledgement type of the current frame by setting at least one subfield of the frame control field.

The frame control field preferably comprises a frame type subfield, in which case the device is arranged to set at least one value thereof to denote a frame type for the immediate acknowledgement frame.

Moreover, the frame control field may include an acknowledgement policy subfield, used to inform the destination device of whether or not an acknowledgement is required in return. Thus, independently of setting an acknowledgement type for the current frame, a frame control field may specify whether an acknowledgement is requested from the destination.

According to a third aspect of the present invention, there is provided a wireless sensor network of devices for monitoring an entity such as a human body, each of the devices arranged to perform a data transfer with another device in the network by sequentially receiving or transmitting frames of data, and operable to acknowledge receipt of at least one frame from the other device by sending an acknowledgement frame; the devices including at least one sensor for monitoring a parameter of the entity, and a coordinator for communicating with the at least one sensor, wherein each of the devices is arranged to send the acknowledgement frame by selecting one of a plurality of frame types including an immediate acknowledgement frame, the immediate acknowledgement frame being an acknowledgement frame sent immediately upon receipt of one frame from the other device.

In the above network, preferably, each of the devices is responsive to a declaration of an emergency operating state of the device to select the immediate acknowledgement frame.

Preferably also, the plurality of frame types includes a delayed acknowledgement frame which is sent only after completion of a data transfer of one or more frames from the other device and having a payload of a number of received frames, each of the devices being arranged in a normal operating state thereof to select the delayed acknowledgement frame. As a third acknowledgement type, a simple ACK without a payload may be provided in a similar manner as proposed in IEEE 802.15.4.

The wireless sensor network may be used as a medical body area network provided to monitor a living body, wherein the declaration of the emergency operating state is made in response to a medical emergency condition of the parameter of the living body.

According to a fourth aspect of the present invention, there is provided a method for monitoring an entity using a network of devices, each of the devices arranged to perform a data transfer with another device in the network by sequentially receiving or transmitting frames of data, and operable to acknowledge receipt of at least one frame from the other device by sending an acknowledgement frame, the method comprising:
defining a plurality of acknowledgement frames of different types including an immediate acknowledgement frame to be sent upon receipt of each individual frame of a data transfer and a delayed acknowledgement frame to be sent only after completion of the data transfer; monitoring a parameter of the entity using one or more of the devices which is equipped with a sensor; and selecting the type of acknowledgement frame to be used for acknowledgement of a data transfer from such devices in dependence upon whether or not the parameter is in an emergency condition. The selecting step may also be dependent on whether an acknowledgement was requested in the data from the sensor-equipped device.

According to a further aspect of the present invention, there is provided a frame format for use in a network of devices performing data transfers by wireless communication and defining a frame control field which includes a subfield for denoting one of a plurality of types of ACK frame including: (i) an immediate acknowledgement frame, this being an acknowledgement frame sent by one device immediately upon receipt of one frame from another device, and (ii) a delayed acknowledgement frame to be sent only after completion of a data transfer from the other device.

Further aspects of the present invention provide software which, when executed by a processor of a sensor device or a coordinator of a wireless sensor network, provides the device according to the first or second aspect defined above, respectively. Such software may be stored on a computer-readable medium.

For a better understanding of the present invention, and to show more clearly how it may be carried into effect, reference will now be made, by way of example only, to the following drawings in which:
Figure 1 illustrates protocol layers in an IEEE 802.15.4 WPAN;
Figure 2 illustrates possible PHY bands of the IEEE 802.15.4 WPAN;
Figure 3 illustrates Star and Peer-to-Peer topologies of a WPAN;
Figure 4 shows the structure of a superframe in a beacon-enabled IEEE 802.15.4 WPAN;
Figures 5 to 8 illustrate possible modes of data transfer between a network device and a co-ordinator in a IEEE 802.15.4 WPAN;
Figure 9 shows a frame format used for a data frame in a IEEE 802.15.4 WPAN;
Figure 10 shows the structure of a Frame Control field in the frame format of Figure 9;
Figure 11 is a table of hitherto-defined values of frame type bits in the Frame Control field of Figure 10;
Figure 12 is a flowchart of steps in a first emergency transmission protocol in an embodiment of the present invention;
Figure 13 is a flowchart of steps in a second emergency transmission protocol in an embodiment of the present invention;
Figure 14 is a flowchart of steps in a third emergency transmission protocol in an embodiment of the present invention;
Figure 15 is a flowchart of steps in a fourth emergency transmission protocol in an embodiment of the present invention;
Figure 16 shows the structure of a Frame Control field in a frame format modified in accordance with one embodiment of the present invention;
Figures 17A and B are tables of possible values of "ACK Request" and "ACK Type" subfields in the frame control field of Figure 16;
Figure 18 is a table of Frame Type values in the frame control field of Figure 16;
Figure 19 shows the structure of a Frame Control field in a frame format modified in accordance with another embodiment of the present invention;
Figure 20 is a table of Frame Type values in the frame control field of Figure 19;
Figure 21 outlines the structure of a Frame Control Field in a further embodiment of the present invention; and
Figure 22 is a table of Frame Type values in the frame control field of Figure 21.

Before explaining the embodiments of the present invention, some background explanation will be given of those parts of IEEE 802.15.4 which are expected to have relevance for the IEEE 802.15.6 standard currently under development, and/or for Body Area Networks including MBANs.

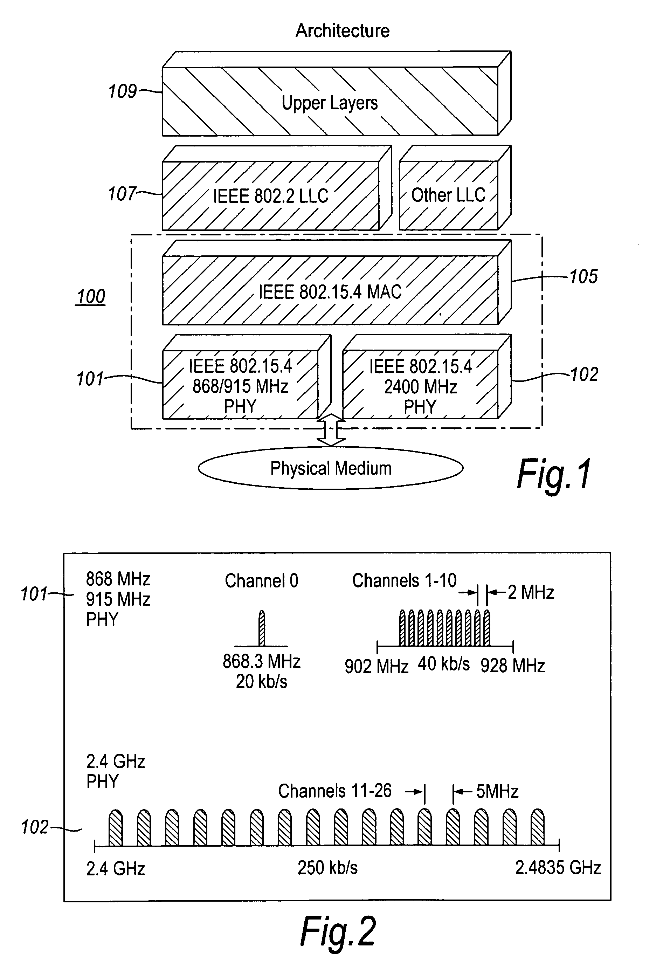

Figure 1 shows the general architecture of a IEEE 802.15.4 WPAN, labelled 100, in terms of the layered OSI model, in which the physical medium is accessed via a PHY layer containing the radio transceiver and its low-level control. As shown, there are two alternative frequency bands 101, 102 for the PHY, which are illustrated in Figure 2. The lower frequency band 101 provides a single 20kb/s channel centred on 868.3MHz, and/or ten channels each of 40kb/s centred on 915MHz. The higher frequency band 102 provides 16 channels each of 250kb/s and centred on a frequency of 2.44 GHz. Which of these bands is used will depend on local regulatory requirements.

Access to the PHY is provided by a MAC (Medium Access Control) sublayer indicated by 105 in Figure 1. Above this, and external to the WPAN 100 as such, are provided a LLC (Link Layer Control) allowing access to the WPAN from other networks; this may be in accordance with the IEEE 802.2 standard, or of another type. Finally, upper layers 109 above the LLC include a network layer to provide network configuration, manipulation, and message routing, and an application layer which provides the intended overall function.

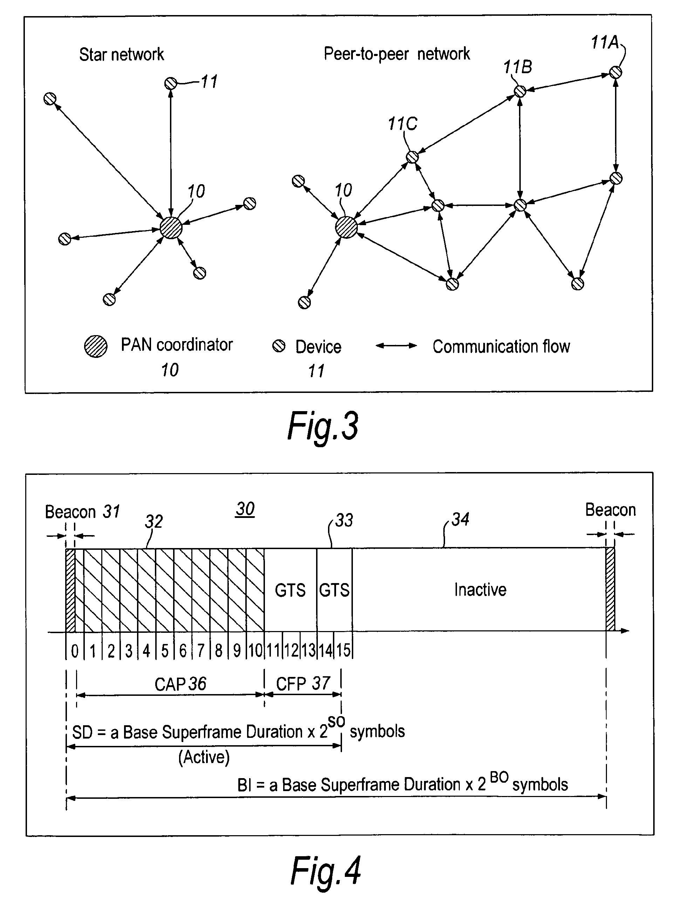

One task of the MAC sublayer is to control the network topology. Star and peer-to-peer are two known topologies in communications networks, and both are provided for in IEEE 802.15.4. In both cases, the topology distinguishes between two basic kinds of network node: devices and coordinators. As shown in Fig.3, in the Star topology a number of devices 11 communicate directly with a central coordinator 10; whilst in the peer-to-peer configuration, communications by a device 11A with the communicator are made along one or more hops with intermediate devices 11 B and 11C acting as relays. The coordinator acts as the access point to the upper layers; in the case of a WSN, it acts as the sink for the data collected by the sensors. Given that the communication range of each device may be very limited (a few metres), the peer-to-peer topology allows a greater area to be covered. The topology may be dynamic, changing as devices are added or leave the network.

In the case of MBANs, for example, a star network would be appropriate in the situation where a coordinator is provided at each patient site (such as a hospital bed), exchanging signals with devices on a single patient. Peer-to-peer would be a more appropriate topology where one coordinator was provided to serve a number of patients (the coordinator might be located at a fixed point in a hospital ward). Thus, whilst the devices 11 will generally be mobile the coordinator may be either mobile or fixed. Peer-to-peer networks may also be more suited to fast-changing environments where it is required to set up or change the network quickly, or to allow self-organisation and self-healing of the network. Self-healing may include, for example, establishing a new coordinator in the event that an existing coordinator has failed or left the network.

Multiple star and/or peer-to-peer networks may be set up in the same location such as a hospital, each with their own coordinator. In this case it will be necessary for the respective coordinators to collaborate in order to avoid mutual interference and to allow sharing or collation of data. In IEEE 802.15.4 such networks are called clusters, and provision is made for establishing an overall coordinator for the clusters as well as for dividing and merging clusters.

Nodes in a WPAN may be constituted by units of varying capabilities. Generally, the role of coordinator will require a relatively capable apparatus with some processing power and transceiver capable of handling transmissions from multiple sources simultaneously. This in turn will necessitate a sufficient provision of electrical power (in some cases, it may be mains powered). On the other hand, other devices in the network may have more limited processing ability and access only to battery power, and may even be so simple as to be unable to act as a relay hop. Devices with very low power availability may be shut down most of the time and only "wake up" occasionally, for example to transmit sensor data to another node. Thus, the IEEE 802.15.4 standard distinguishes between "full-function" and "reduced function" devices. Availability of power is a particular issue for MBANs in which sensors may be implanted within a body and thus unable to have a large or rechargeable battery.

Two types of WPAN envisaged in IEEE 802.15.4 are beacon-enabled and non beacon-enabled.

In a beacon enabled network, the coordinator transmits a beacon periodically and devices listen periodically to that beacon to synchronize to the network and to access the channel. The channel access is in units of "frames" transmitted sequentially within a "superframe" according to a superframe structure as shown in Figure 4, which is defined by the coordinator. Each superframe 30 consists of two parts: active and inactive. The active part is divided into a contention access period CAP 36, followed by an optional contention free period CFP 37 for guaranteed access for applications with quality of service requirement.

As indicated by the vertical divisions in Figure 4, the superframe is divided into 16 equally-spaced time slots each capable of carrying a frame of data from the coordinator or from a device. Thus, considering the devices associated with one coordinator, only one device may be in communication with the coordinator at a time during each successive time slot within the superframe. First comes a slot 31 for a beacon frame (see below) transmitted by the coordinator. After this, several slots 32 are provided within the CAP, allowing data transmission to or from devices on a contended basis, following the known CSMA-CA algorithm. Briefly, in CSMA-CA, each time a device wishes to transmit within the CAP, it waits for a random period. If the channel is found to be idle, following the random backoff, the device transmits its data. If the channel is found to be busy following the random backoff, the device waits for another random period before trying to access the channel again.

Next there follow the guaranteed time slots GTS 33 of the CFP, and as shown, each of these may extend over more than one basic time slot. After the expiry of the inactive period, the next superframe is marked by the coordinator sending another beacon frame 31. Devices can go to sleep during the inactive period 34 of the superframe. Thus, by extending the length of the inactive period 34, battery power of devices can be conserved as much as possible.

In the non beacon enabled network, the coordinator is not required to transmit a beacon for synchronization unless it is requested to do so (e.g. for network discovery purposes). The channel access is not restricted by the superframe structure and devices are asynchronous, performing all data transfers by CSMA-CA. They can follow their own sleeping pattern according to a certain protocol such as sensor - MAC.

For an MBAN application, the coordinator is external to the body or bodies being monitored. It may be a PDA, a mobile phone, a bedside monitor station or even a sufficiently-capable sensor which on a temporary basis acts as a coordinator. As mentioned above, the coordinator in the beacon enabled network is in charge of providing synchronization and channel access to network devices. The start and end of a superframe is also defined by a coordinator. The coordinator has two main features of potential communications to other networks and access to a sufficient power supply, for example by easy replacement of the charged batteries.

A central care and monitoring unit may also be provided for overall supervision of a network possibly containing several coordinators. This may take the form of a room with monitoring equipments capable of receiving continuous or occasional streams of emergency data from multiple patients. There will typically be nurses or medical specialists stationed in the central unit who are continuously watching and monitoring the patients' data. They will take actions in response to change in patients' conditions. The central care and monitoring unit may be connected wirelessly to the or each coordinator (in which case it may or may not be considered part of the MBAN) or it may have a wired connection to each coordinator (in which case it would normally be considered as outside the MBAN as such)

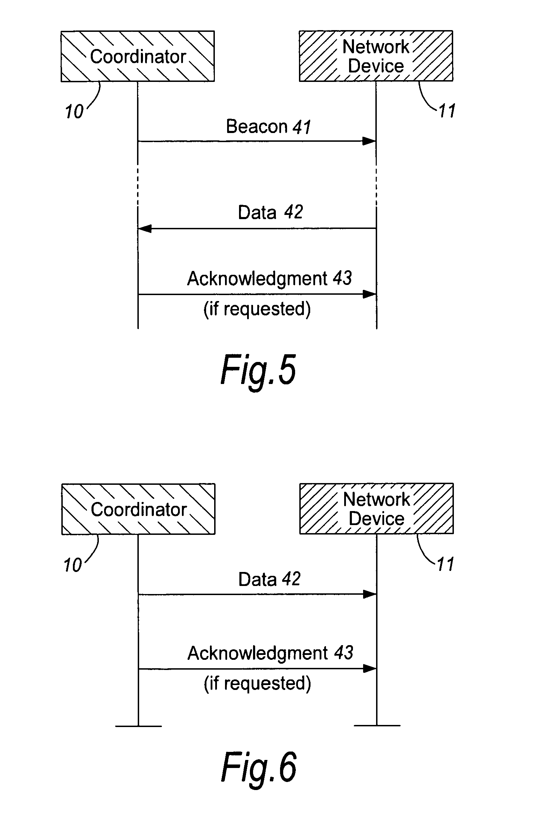

Figures 5 to 8 illustrate data transfers between a device and a coordinator in a IEEE 802.15.4 network. Three basic types of transfer are defined in IEEE 802.15.4:
(i) data transfer to a coordinator as recipient to which a device (sender) transmits its data - used in both star and peer-to-peer topologies;
(ii) data transfer from a coordinator as sender in which the device receives the data - used in both star and peer-to-peer topologies; and
(iii) data transfer between two peers - used in peer-to-peer networks only.

Figures 5 and 6 depict a transfer from the device (Network Device 11) and coordinator (Coordinator 10) for both the beacon-enabled and non beacon-enabled case respectively. The difference is that in the beacon-enabled case the device 1 must wait to receive a beacon frame 41 from the coordinator prior to sending the data (data frame 42) using CSMA-CA in the CFP, or using a GTS in the CAP; whilst in the non beacon-enabled case there is normally no beacon frame and the device 11 sends a data frame 42 at will using CSMA-CA. In either case, the coordinator acknowledges the successful reception of the data by transmitting an optional acknowledgment frame or ACK 43. These different types of frame are explained in more detail below.

If the recipient is unable to handle the received data frame for any reason, the message is not acknowledged. If the sender does not receive an acknowledgment after some period, it assumes that the transmission was unsuccessful and retries the frame transmission. If an acknowledgment is still not received after several retries, the sender can choose either to terminate the transaction or to try again. When the acknowledgment is not required, the sender assumes the transmission was successful.

Note that in IEEE 802.15.4 the acknowledgement of data sent from a coordinator or device is optional and is carried out only upon request by the originating device for reliable transfer. Moreover, there is only one type of acknowledgement that can be requested.

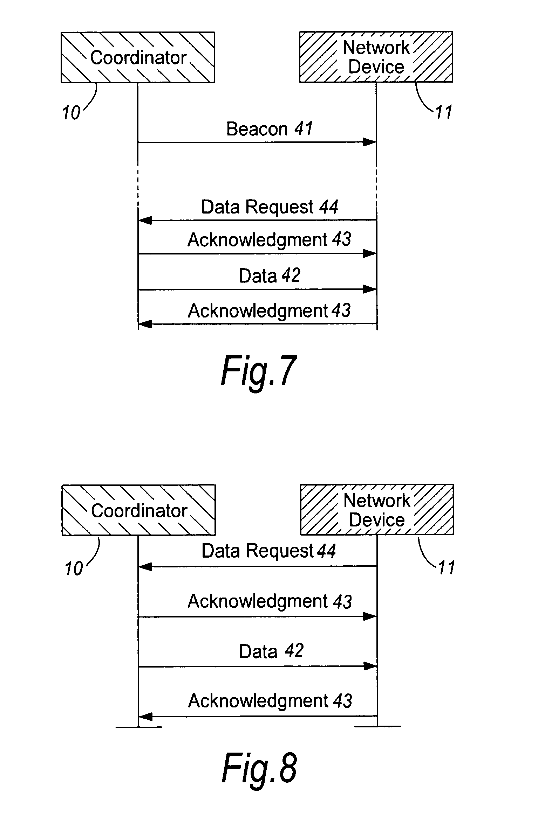

Figures 7 and 8 illustrate data transfer from a coordinator 10 to a device 11. When the coordinator wishes to transfer data to a device in a beacon-enabled WPAN (Figure 7), it indicates in the beacon frame 41 that the data message is pending. The device periodically listens to the beacon frame and, if a message is pending, transmits a data request (MAC command frame) 44 requesting the data by CSMA-CA. The coordinator 10 acknowledges the successful reception of the data request by transmitting an acknowledgment frame 43. The pending data frame 42 is then sent using slotted CSMA-CA or, if possible, immediately after the acknowledgment. The device 11 may acknowledge the successful reception of the data by transmitting an optional acknowledgment frame 43. The transaction is now complete. Upon successful completion of the data transaction, the message is removed from the list of pending messages in the beacon.

In the non beacon-enabled case, the coordinator 10 which has data ready for a particular device 11 has to wait for a data request 44 from the device concerned, sent on a contention basis. Upon receiving such a request, the coordinator sends an acknowledgement frame 43 (this can also be used to signify that no data is ready, if that is the case), followed by the data frame 42, in response to which the device 11 may send another acknowledgement frame 43 in return.

For simplicity, the above procedures have considered only the above cases (i) and (ii) of data transfers between the device and coordinator, but in a peer-to-peer network, as already mentioned, data transfers will generally take place via mechanism (iii), involving one or more intermediate nodes, which increases the risk of collision and the delays involved.

As indicated in Figures 5 to 8, communications in a IEEE 802.15.4 network take place in units of frames which divide the available resources in a time-division manner, and which involve frames of four different types:
- beacon frame 41, used by a coordinator to transmit beacons
- data frame 42, used for all transfers of data
- acknowledgment frame 43, used for confirming successful frame reception
- MAC command frame 44, used for handling all MAC peer entity control transfers such as data requests.

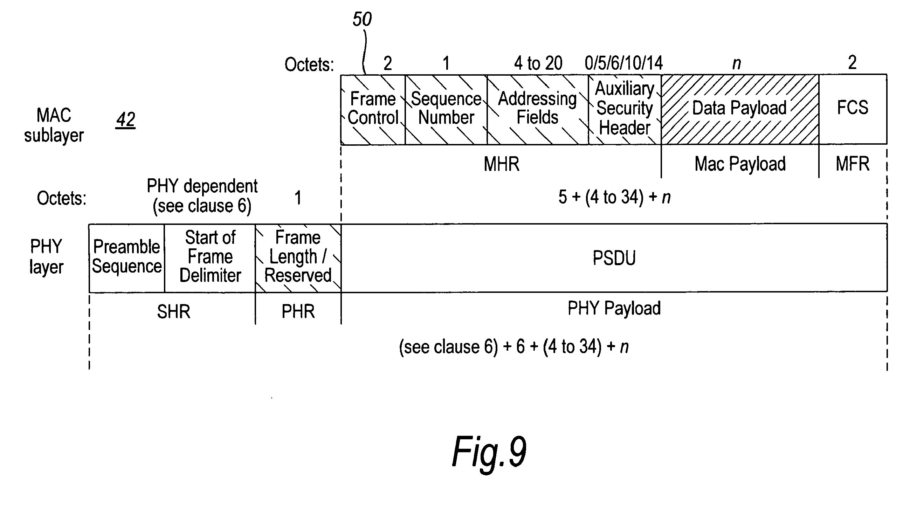

The structure of each of the four frame types is quite similar, and is shown in Figure 9 for a data frame 42 by way of example. In the Figure, the two horizontal bars represent the MAC sublayer and the PHY layer respectively. Time progresses from left to right, and the time length of each successive field of the frame is shown (in octets) above the field concerned. Every frame consists of a sequence of fields in a specific order, these being depicted in the order in which they are transmitted by the PHY, from left to right, where the leftmost bit is transmitted first in time. Bits within each field are numbered from 0 (leftmost and least significant) to *k* - 1 (rightmost and most significant), where the length of the field is k bits.

The data to be sent via the data frame 42 originates from the upper layers. The data payload is passed to the MAC sublayer and is referred to as the MAC service data unit (MSDU). The MAC payload is prefixed with an MAC Header MHR and appended with a MAC Footer MFR. The MHR contains the Frame Control field 50 (see below), data sequence number (DSN), addressing fields, and optional auxiliary security header. The MFR is composed of a 16-bit frame check sequence FCS. The MHR, MAC payload, and MFR together form the MAC data frame (i.e., MPDU). The MPDU is passed to the PHY as the PHY service data unit PSDU, which becomes the PHY payload. The PHY payload is prefixed with a synchronisation header SHR, containing a Preamble Sequence and a start-of-frame delimiter SFD, and a PHY header PHR containing the length of the PHY payload in octets. The preamble sequence and the data SFD enable the receiver to achieve symbol synchronization. The SHR, PHR, and PHY payload together form the PHY packet (the PHY protocol data unit PPDU).

The beacon frame 41, acknowledgement frame 43 and MAC command frame 44 have a similar structure, except that the MAC payload has a different function in each case, the acknowledgement frame having no MAC payload. Also, the beacon frame 41, the acknowledgement frame 43 and MAC command frame 44 originate in the MAC sublayer without involvement of the upper layers.

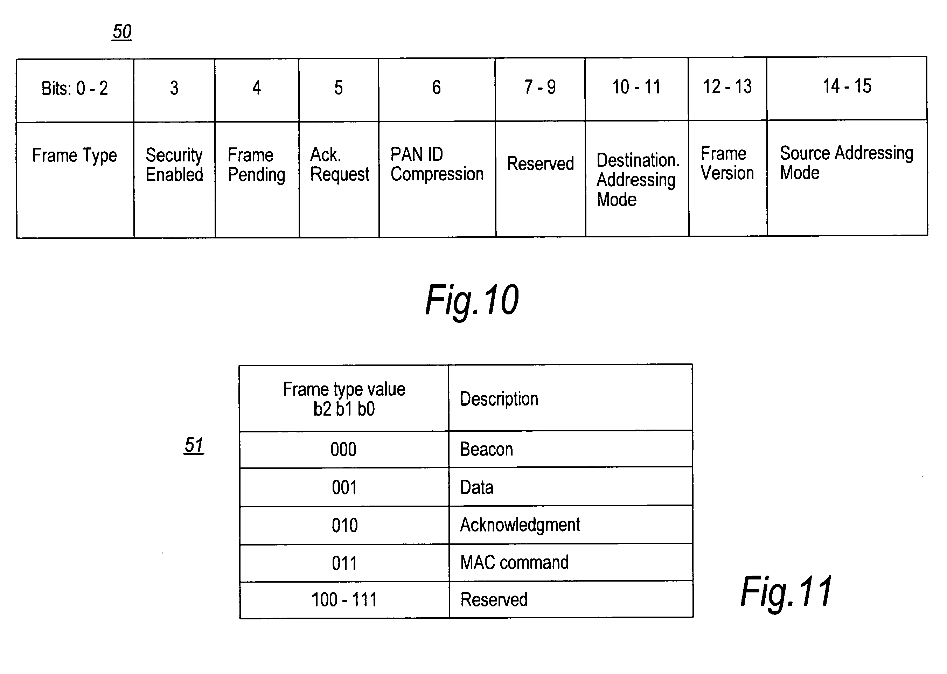

The frame control field 50 used in each type of frame is shown in more detail in Figure 10. It consists of 16 bits assigned to subfields for different purposes as illustrated. In particular, the first three bits of the field denote the Frame Type 51:
beacon frame 41, data frame 42, acknowledgement frame 43, or MAC command frame 44. The way the frame type is signified is shown in Figure 11. Following the frame type bits 51 is a single-bit Security Enabled subfield 52 denoting whether or not security is enabled by the MAC sublayer. This is followed by a Frame Pending subfield 53 to indicate whether the sender has more data for the recipient. Next is an Ack. Request subfield 54 to indicate whether an acknowledgement is requested from the recipient. After this follow some further sub-fields 55, to 59 which are used for addressing purposes or reserved in the current IEEE 802.15.4 specification.

As mentioned, Figure 11 is a table of the possible bit values for the Frame Type subfield 51, showing that values 100 and 101 are unused in the IEEE 802.15.4 specification.

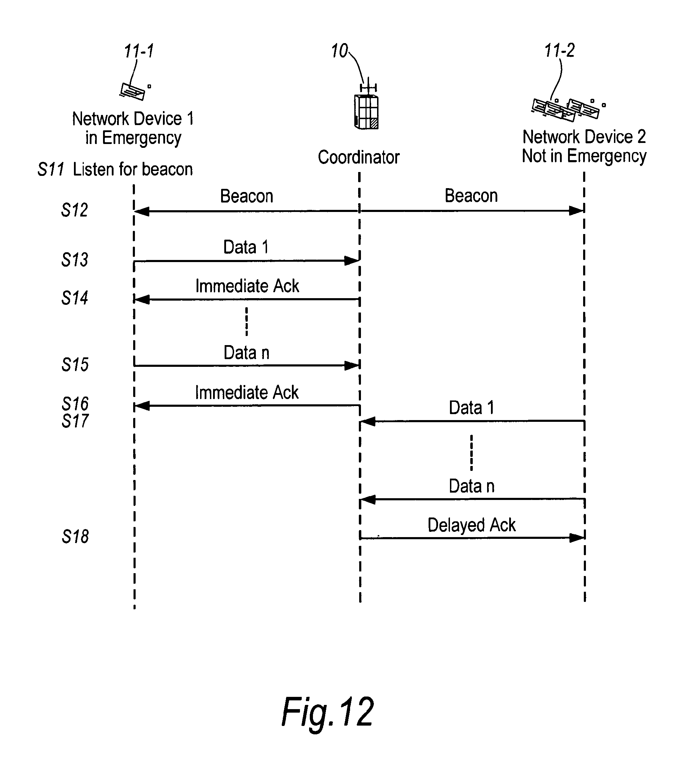

Having outlined the background of the present invention, some embodiments will now be described with reference to Figures 12 to 22.

The present invention addresses, for example, the situation in which a patient is being monitored via a MBAN of sensors disposed in, on or around the patient's body. It is assumed that at least some of the sensors are involved in sensing one or more parameters, such as heart rate, which might indicate a life-threatening situation for the patient. It is further assumed that upon recognising such a life threatening situation with respect to at least one sensed parameter, the MBAN (more precisely, the sensor(s) concerned, their coordinator or some higher-level controller), declares an "emergency" state of the sensor(s) monitoring the parameter which is critical. Below, this is referred to as the network device concerned being "in emergency". An "emergency condition with respect to a device" means an emergency with which the device is involved, for example by being a sensor of the parameter which is critical, or by being a coordinator receiving data from such a sensor. An "emergency operating state" is some manner of operating a network device in emergency, whilst a "normal operating state" is a condition which applies when a network device is not in emergency.

The way in which this emergency state is declared is outside the scope of the present application, but is the subject of a co-pending application by the same applicant.

An important feature of embodiments of the present invention is that the known concept of the acknowledgement signal or "ACK", as known from IEEE 802.15.4 for example, is supplemented by an additional two types of ACK: (i) a delayed ACK used for medical devices in a routine (non-emergency) situation, and/or for any non-medical devices in an MBAN; and (ii) an "immediate ACK" used, among other situations, for medical devices in emergency. Here, the delayed ACK (i) may carry a payload to indicate a number of frames successfully received, and is thus distinct from the simple ACK provided in IEEE 802.125.4 The use of the novel immediate ACK and of the delayed ACK will now be described in the form of transmission protocols for various data transfer cases in an MBAN, by referring to Figures 12 to 15.

The first case considered is that of data transfer from a network device in emergency to a coordinator. It is assumed that, in a beacon-enabled MBAN, there is a first network device 11-1 in emergency, and which wishes to transfer some data to a coordinator 10. In addition, there are other network devices 11-2 which are not in emergency (that is to say, in the case of sensors, whatever parameter they are sensing is not a critical level; alternatively they may be devices other than medical sensors which consequently are never judged to be in an emergency state). As part of the process of declaring the emergency, both the network device and coordinator recognise the existence of the emergency. Thereafter (for as long as the emergency condition persists) data from (and commands to) the network device in emergency are treated as more important than those of other network devices. For example, it may be considered more important for the coordinator to receive regular updates of sensed values from the network device in emergency, if necessary at the expense of its communications with other network devices.

As shown in Figure 12, the transmission protocol in this case begins (step S11) with the network device 11-1 in emergency listening for a beacon frame from the coordinator 10. As already mentioned, receipt of the beacon enables a network device to synchronize to the network and to access the channel, that is to find a slot for its transmission in superframe structure shown in Figure 4. At some timing (S12) the coordinator broadcasts the beacon frame to all devices in the network. Upon receiving the beacon frame, at the next opportunity (for example in a frame allotted to it within the same superframe), device 11-1 sends one frame of data ("Data 1"), step S13. The novel immediate ACK is now employed by the coordinator 10 to send an acknowledgement frame back to the network device 11-1.

If there is no more data available at the network device 11-1, this completes the protocol. On the other hand, there may be more data waiting in the sensor to be transmitted. If so then, following receipt of this immediate ACK, device 11-1 sends a second frame of data, which in turn is acknowledged by coordinator 10 using an immediate ACK, and the process can be repeated until all available data has been transmitted successfully. In Figure 12, this process is indicated at S15 and S16 for the sending and acknowledgement of an n-th frame of data, "Data n".

The network device in emergency 11-1 having completed its data transmissions to the coordinator 10, other network devices can take their turn. As indicated at S17, some other network device(s) in the network, labelled 11-2, sends data one frame at a time in a similar manner to the network device 11-1 which is in emergency. The difference is that there is no immediate ACK after the coordinator receives each item of data; rather, the coordinator 10 waits until the network device 11-2 has finished sending its data (as before, this may require a series of n transmissions) before issuing a delayed ACK at step S18, the payload of the delayed ACK indicating the number of frames received successfully. Another possible difference is that the amount of data which network device 11-2 may send per frame, might not be as large as that for network device 1-1, if priority of resource allocation has been given to the latter device in emergency.

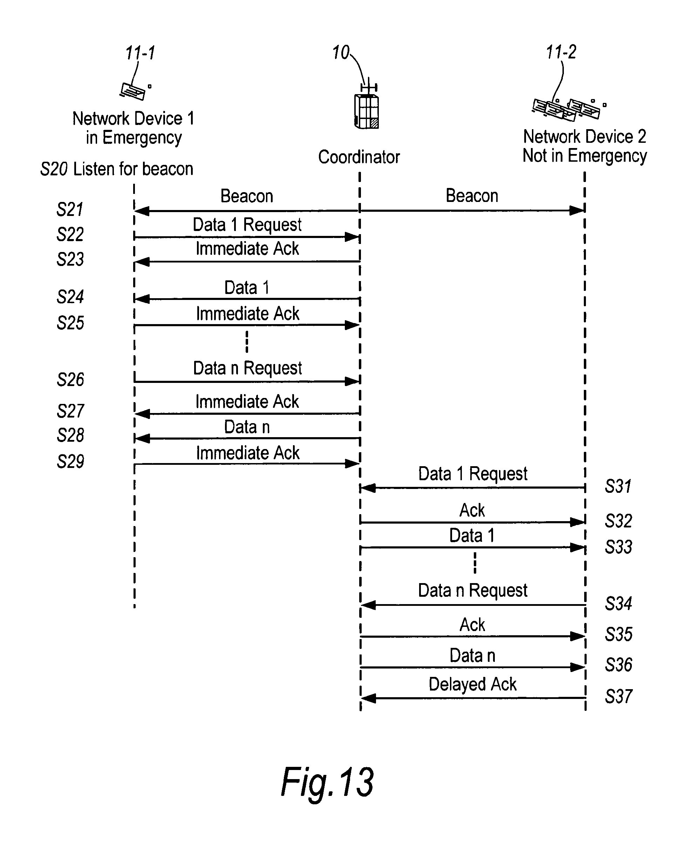

Figure 13 illustrates a similar transmission protocol for the case of the coordinator sending data (which may include commands) to a network device in emergency.

As before, the process begins (S20) with the network device 11-1 listening for a beacon. The coordinator sends the beacon at S21 (as indicated, the beacon is broadcast to all devices, not just to the network device in emergency). At S22, the network device 11-1 sends a data request to the coordinator 10. This in turn responds (S23) with an immediate ACK of the request, and this is followed (S24) by transmission of a first frame of data to the network device 1-1.

If more data is needed at the network device 11-1, a further data request is sent as indicated at S26 for an n-th request. In each case the coordinator responds first with an immediate ACK (S27) and then with another data frame (S28). Following completion of transmission from the coordinator, the network device in emergency sends an immediate ACK of its own in step S29.

The coordinator 10 is now able to switch to communicating with other network devices in the network. For example, one or more network devices 11-2, which are not in emergency, may request data from the coordinator. This is done by, firstly, device 11-2 sending a data request to the co at step S31. The coordinator responds to this in step S32 with the requested Ack (shown here as ACK, indicating that the conventional IEEE802.15.4-type ACK can be used for this purpose). The coordinator follows this up with a first frame of data (S33), and if there is more data to be received by the network device 11-2, the process repeats up to n times, as shown by steps S34, S35 and S36 for the n-th transfer. The protocol is completed by a final, delayed ACK from the network device 11-2 to the coordinator 10 (step S37). Thus, all three types of ACK are employed in the above example. Note that the immediate ACK could be used if desired for the acknowledgement in step S32; thus, the immediate ACK is not necessarily reserved exclusively for emergency situations.

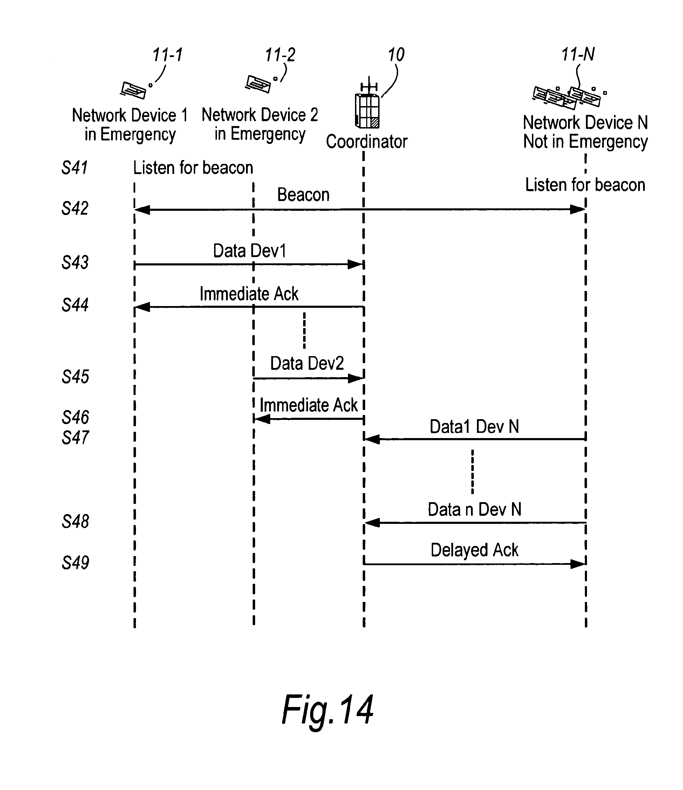

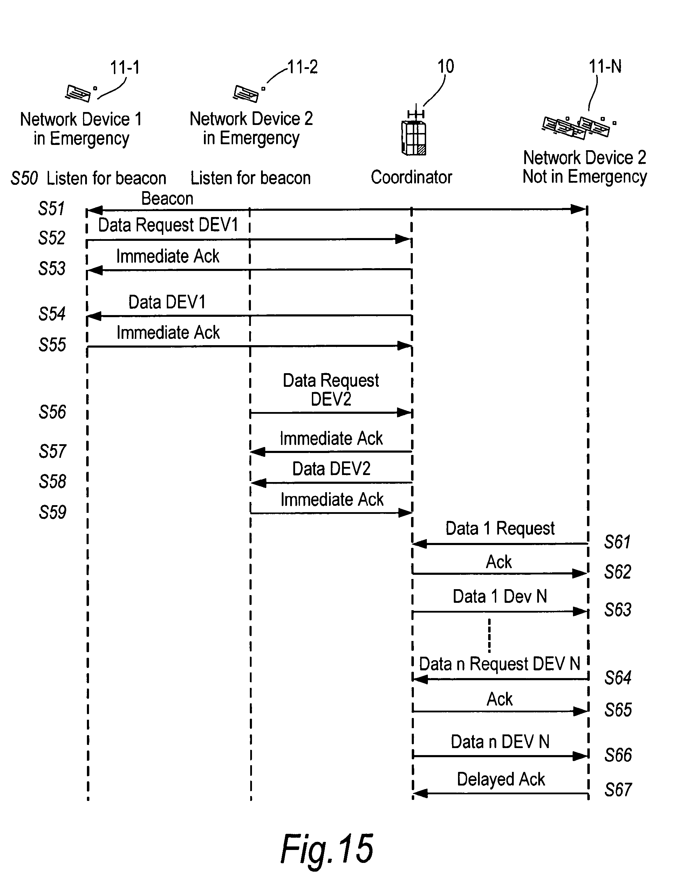

The above two protocols have assumed that only one network device is in emergency. However, two or more devices could be in the emergency state at the same time. For example, a patient whose condition becomes critical may show extreme values of more than one sensed parameter at the same time. Figures 14 and 15 show modified transmission protocols for this situation.

In Figure 14, the network devices 11-1 and 11-2 are now both in emergency, whilst some other devices (s) 11-N are not in emergency. The process begins with the respective network devices listening for a beacon (S41). The coordinator broadcasts this in step S42. Then, a first of the network devices in emergency 11-1 sends a first frame of data "Data Dev 1", in step S43. The coordinator 10 responds with a immediate ACK in step S44. As before, this could be followed up by transmission of further data frames from the network device 11-1, each confirmed by an immediate ACK from the coordinator 10.

Assuming that network device 11-1 has finished transmission, a second network device in emergency 11-2 begins data transfer to the coordinator 10 in step S45. The coordinator once again acknowledges each frame of data received from the device in emergency by sending an immediate ACK.

After that, as before the coordinator is free to communicate with each network device not in emergency, as indicated by a data transfer from network device 11-N in steps S47 and S48. The coordinator 10 sends a delayed ACK in response, only on completion of this data transfer (S49), again including as payload the number of frames received.

Figure 15 shows a similar protocol for the case of data transfer from the coordinator to network devices, two of which (11-1 and 11-2) are again in emergency and one or more others (11-N) not in emergency. The protocol proceeds in analogous manner to that already described with respect to Figures 13 and 14.

The above protocols only involve the sensor and the coordinator. However, an MBAN may be implemented in such a way that several coordinators report to some form of central monitor as previously mentioned, which could be either automatic or under human supervision. For example, such a central monitor could be located at the desk of a ward sister who oversees several patients in a hospital. In this scenario, data transfers to and from the central monitor and pertaining to the network device 11-1 in emergency (for example, sensed data from device 11-1 which the coordinator relays to the central monitor, or a command from such a central monitor to the device in emergency) can also employ the immediate ACK.

In addition, although the above protocols assume a single coordinator 10 for simplicity, this is not essential. The procedures explained above might involve more than one coordinator, for example in a peer-to-peer setting where several clusters each with their own coordinator report to a single central monitoring unit. In this case, messages exchanged among the coordinators, or from a given coordinator to the central monitor, could also employ the immediate ACK where such messages concern a network device in emergency.

Although the above description has referred only to sensors and coordinators in a wireless sensor network, with the possible inclusion of a central monitor, it is possible for a MBAN to include other devices than these kinds. Potentially, some means of intervening in the patient's care, such as a drug dispensing mechanism, could be arranged in the network under wireless control of the coordinator and/or any central monitor. The immediate ACK need not be confined to acknowledgement of data from or to sensors, but could also be used in acknowledgement of a critical command, for example to delivering a drug to the patient to stabilise a life parameter like heart rate. More generally, the immediate ACK can be used any time in response to a specific ACK request (see below).

Typically, the emergency condition referred to above will be a medical condition of a patient, since this is seen as an important application of the present invention. However, it is not the only possible application. Sensors could be used to monitor a living body in non-medical situations. For example, any person at risk (examples: old or frail people, or children; people in dangerous environments, etc.) could be monitored using a BAN of sensors. In this case, the emergency condition would represent some form of physical threat such as an accident, and the immediate ACK could again be employed to improve reliability of communications with sensors relevant to monitoring the emergency.

Moreover, the present invention is not confined to use on a living body. There are many possibilities beyond the BAN human or other living body. One possibility is a WSN capable of detecting industrial emergencies such as many potential scenarios in a mission critical industrial environment (for example, power stations). This can apply to multiple control points in a factory environment. For example we may consider temperature sensors in a factory's heating facility or pressure thresholds for food product lines. The immediate ACK protocol may applied to emergencies in these systems just as for medical emergencies. Thus, the term "entity" in the claims is to be interpreted as covering any such industrial environment in addition to a living being.

Some description will now be given of how the above protocols may be accommodated within a communications standard, like IEEE 802.15.6 currently under development, drawn from IEEE 802.15.4.

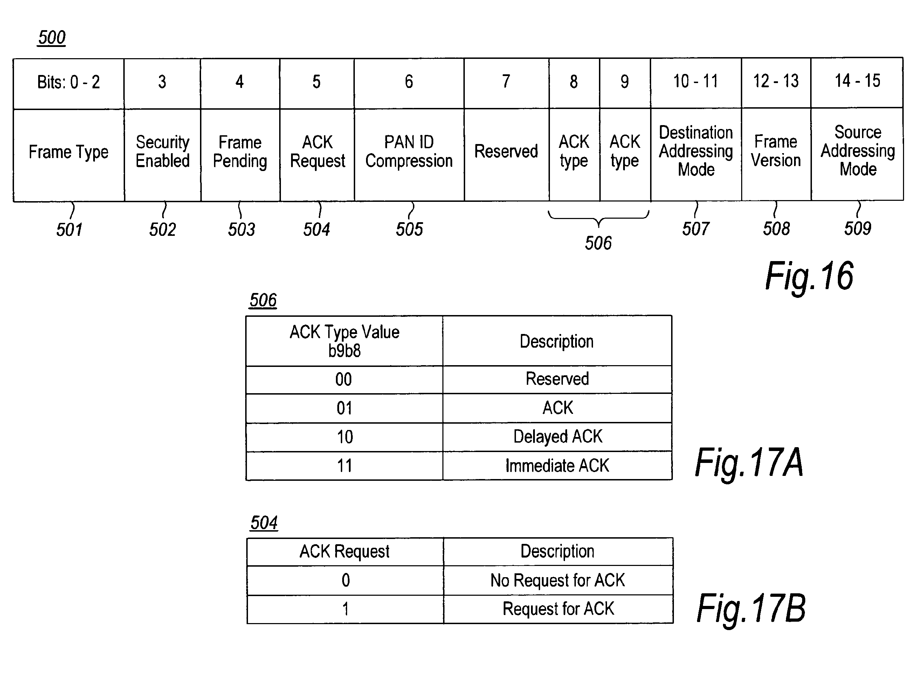

Figures 16 to 18 illustrate a first possible modification to the IEEE802.15.4 frame format in one embodiment of the present invention, to accommodate the immediate ACK through addition of a new subfield for use in IEEE802.15.6. This first modification accommodates the immediate ACK without including any other novel features such as the emergency state referred to above.

As already outlined, IEEE 802.15.4 provides various frame types including beacon frame 41, data frame 42, acknowledgement frame 43 and MAC Command frame 44. In IEEE 802.15.6, one way to implement the above-described procedures will be to modify the frame control field which is employed in IEEE 802.15.4 to define the frame type and other characteristics.

Figure 16 shows the structure of a Frame Control Field 500, corresponding to the Frame Control Field 50 of Figure 10 already proposed for IEEE 802.15.4. The frame control field 500 could be included, for example, in a MAC command frame or a data frame. Figures 16 and 17 illustrate the required modification to the IEEE802.15.4 frame format to accommodate different types of acknowledgements and make it suitable for IEEE802.15.6. Figure 16 shows the whole of the frame control field in a similar way to Figure 10, and Figures 17A and B show the bit positions where changes are made, in this embodiment of the present invention, for suitability for IEEE 802.15.6. Here, Figure 17A shows acknowledgement bits which characterise the type of the current frame in which this frame control field is included, whilst Figure 176B shows an acknowledgement bit in the form of an acknowledgement request for a return frame, if any.

This modification is backward compatible with IEEE 802.15.4. As is made clear by Figure 17A, it exploits two reserved bits in the frame control to indicate different types of ACKs. The two bits (b9b8 in Figure 17A) are labelled as ACK types and are used to distinguish three types of Acks in the current frame: 01=ACK (e.g. IEEE 802.15.4-type simple ACK as mentioned above), 10=delayed ACK, and 10=immediate ACK, with one field value 00 reserved for future use. Meanwhile, as shown in Figure 17B, the ACK request bit 504 is set to "0" when no acknowledgement of the current frame is required and to "1" when a request for acknowledgement is being made. Thus, any of the three types of ACK can be associated with the current frame independently of any acknowledgement request being made of the recipient.

ACK is used for acknowledgement of a data request from device in a normal situation. Immediate ACK is used, for example, to acknowledge every frame when the device is in emergency situation. Both ACK and immediate ACK have no payload. Delayed ACK is used upon completion of a data transfer to acknowledge a number of frames for devices not in emergencies. The delayed ACK has a payload to indicate the successful receipts of a number of frames and therefore the frames to be retransmitted.

In non-emergency situations, acknowledging every frame introduces an overhead and therefore additional power consumption. For this reason, the delayed ACK is preferably employed in these situations.

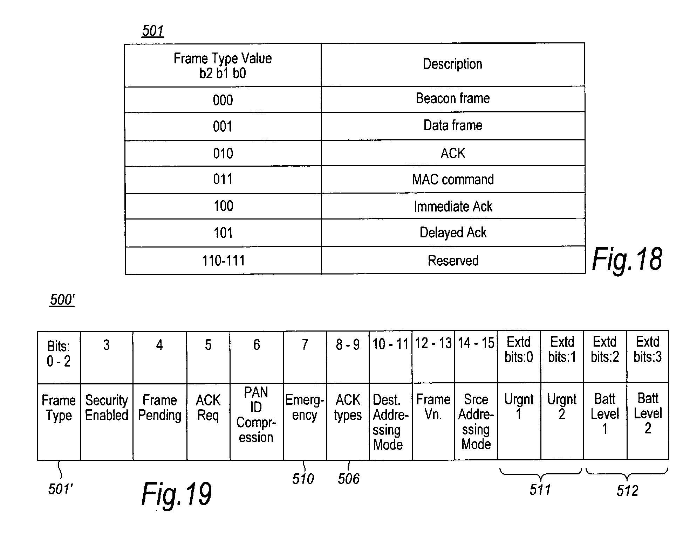

For the frame type field 501 in Figure 16, no new bits are needed to differentiate between the two types of acknowledgement. In comparison with the frame type field 51 of IEEE802.15.4 as shown in Figure 11, wherein some fields are reserved for future use, in the present embodiment as shown in Figure 18, the reserved field 100 is used to indicate immediate ACK, and 101 to indicate a delayed ACK.

In the remaining subfields of the frame control field 500, the same components are present as in the frame control field 50 of Figure 10. Thus, the subfields for security enabled bit 502, Frame Pending bit 503, PAN ID compression 506, destination addressing mode 507, frame version 508 and source addressing mode 509 have the same functions as their counterparts in IEEE 802.15.4 frame control field 50. It can thus be seen that to accommodate the immediate acknowledgement frame by itself can be achieved with minimal changes to the existing frame control field in IEEE 802.15.4.

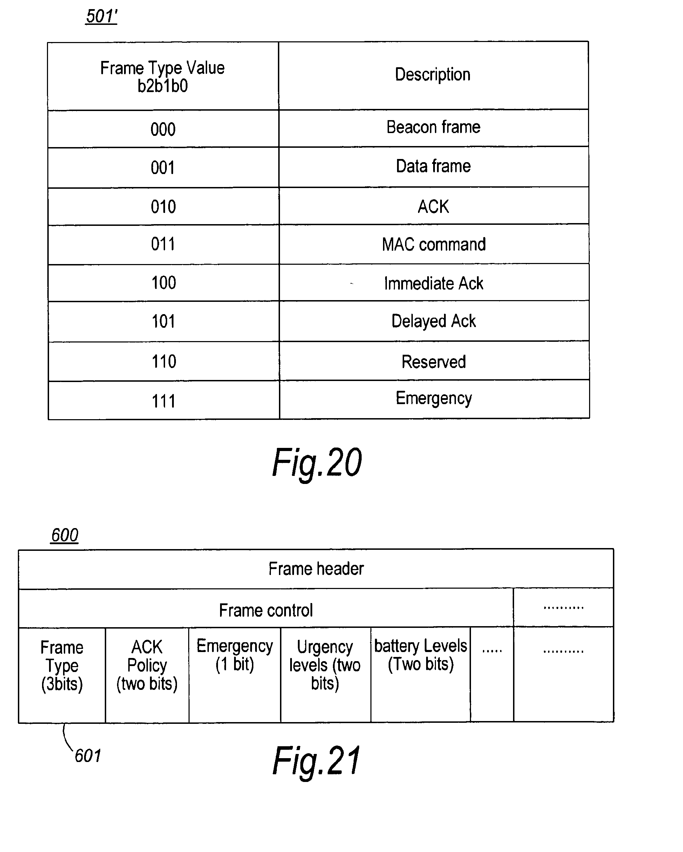

Figure 19 and 20 illustrate a second possible modification to the IEEE802.15.4 frame format in another embodiment of the present invention, to accommodate not only the immediate ACK but other novel features including the emergency state referred to above, an indication of the state of a battery of a network device, and an indication of "urgency".

The format of the frame control field 500' of Figure 19 differs from that of Figure 16 in that a further frame type is defined within the frame type subfield 501' (see below), bit position 7 (previously reserved) is now used to denote an emergency in the sense already discussed earlier, and the above indications of battery state (i.e. remaining charge or voltage level) and "urgency" are represented by new subfields 511 and 512 requiring additional bits (labelled "Extd bits" 0-3 in the Figure). As can be seen, two bits each are allocated to each of "Urgnt" and "Batt Level" allowing up to four levels to be defined for each. The meaning and use of these new subfields is outside the scope of the present invention, but it is noted here that they may be used in conjunction with the emergency status already referred to, and the designation of ACK type in accordance with the present invention, to provide more flexible signalling between the devices of a BAN. Thus, for backward compatibility, the reserved bits (7-9) of IEEE802.15.4 are used for emergency and acknowledgment types. In addition, the frame control has been extended by one octet of which two bits are used to distinguish various levels of urgency and another two bits for battery levels. The remaining two bits are reserved.

The IEEE802.15.4 modified frame type is as shown in Figure 20, which should be compared with Figures 11 and 18. Compared with the embodiment of Figure 18, the difference is that the previously-reserved value 111 is now used to denote the emergency frame.

The above embodiments have taken as their starting point the IEEE 802.15.4 standard and made the minimum necessary modifications, ensuring backward compatibility. On the other hand, starting a standard from a "Greenfield" approach it might be desired to include in the frame control the following:
- two bits for ACK types
- two bits for urgency levels
- two bits for battery levels
- Three bits to indicate the type of frame

Moreover, the frame type in the control frame should include values to indicate the following:
- Emergency frame
- ACK frame
- Immediate ACK frame
- Delayed ACK frame
- In addition to other type frames such as data frame MAC frame, Beacon frame.

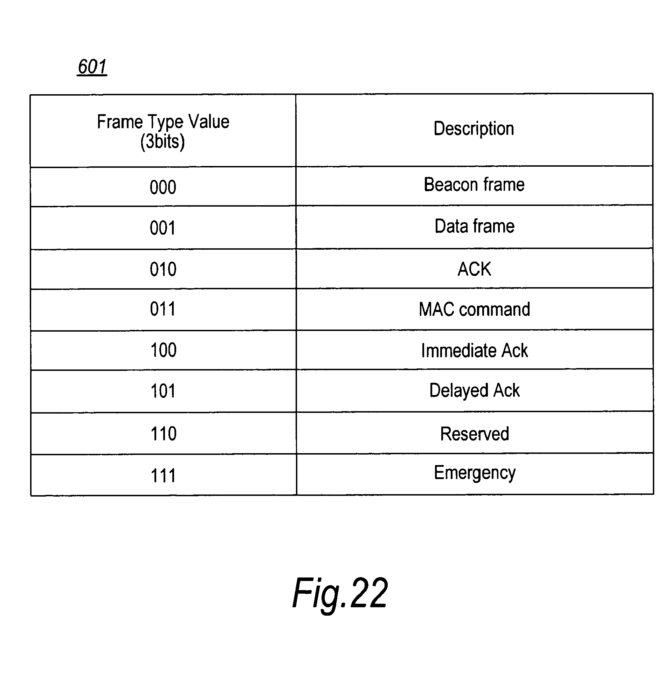

Figures 21 and 22 are similar to Figures 19 and 20, respectively, but based on such a "Greenfield" approach rather than modifying the existing frame structure in IEEE 802.15.4.

To summarise, embodiments of the present invention may provide one or more of the following features and advantages:
(a) a way to distinguish between a normal (delayed) acknowledgement and an immediate ACK signalling;
(b) a link between a medical emergency situation and immediate ACK signalling;
(c) novel protocols for secure and reliable transmission between a network device and coordinator base on the concepts of delayed and immediate ACK;
(d) a new acknowledgement policy to be used in IEEE 802.15.6 ;
(e) modifying a frame control field to indicate an acknowledgement to be used in an emergency situation; and
(f) defining the immediate ACK and delayed ACK for IEEE 802.15.6 by use of reserved values of an existing frame type field already defined in IEEE 802.15.4.

Embodiments of the present invention may have a vital role to play in facilitating emergency management by use of MBANs. The following scenarios may be noted:
(i) Hundreds of millions of patients worldwide with cardiac and heart problems can be monitored in hospital or at home by employing wireless sensors forming an MBAN on their bodies. The MBAN can provide extra mobility for such patients. However, for this group of patients under situations such as abnormal heart functioning or more severe cases such as heart attack, it is vital to secure a reliable communication channel to make sure that no emergency or alarm signal will be missed. The present invention provides a secure emergency trigger mechanism to make all the entities involved aware about an emergency by sending an immediate ACK or "Emergency Acknowledge".
(ii) Hundreds of millions of people worldwide suffer from diabetes. Implantable or non-invasive methods for glucose measurement have been considered recently. An MBAN can be used to monitor a patient's glucose level information on a 24-hour basis. There are situations where the patient's glucose level is off the chart and emergency geolocation and other necessary urgent medical procedures for the patients are required.
(iii) MBANs may be used to gather sensed data while monitoring a patient in intensive care where the loss of data could be life threatening.
(iv) Improves the labour costs and efficiency of emergency response in a medical system.
(v) Improves the emergency awareness in a medical MBAN system.
(vi) Reduces the labour costs by automating the emergency response process.
(vii) Although primarily envisaged for low data-rate applications, MBANs could have application to transfer of streaming video/audio data where loss of individual packet is crucial and affects the quality. Erroneous data may have a negative impact on the diagnosis of illness in emergency cases.
(viii) For medical diagnosis, MMR or X-ray images need to be very clear in order for the doctor to diagnose properly the patient. Again, therefore, reliable data transfer is essential.

In summary, the present invention can provide a method for monitoring an entity such as a living body using a body area network of devices, each of the devices arranged to perform a data transfer with another device in the network by sequentially receiving or transmitting frames of data, and operable to acknowledge receipt of at least one frame from the other device by sending an acknowledgement frame. The method includes defining a plurality of acknowledgement frames of different types including an immediate acknowledgement frame to be sent upon receipt of each individual frame of a data transfer, and a delayed acknowledgement frame to be sent only after completion of the data transfer. Some parameter of the living body is monitored using one or more of the devices which is equipped with a sensor, and the type of acknowledgement frame to be used for acknowledging a data transfer is selected in dependence upon whether or not the parameter is in an emergency condition.

The present invention may take the form of a novel sensor, coordinator, or hardware modules for the same, and can be implemented by replacing or modifying software executed by processors of the sensor(s) and/or the coordinator.

Thus, embodiments of the present invention may be implemented in hardware, or as software modules running on one or more processors, or on a combination thereof. The invention may also be embodied as one or more device or apparatus programs (e.g. computer programs and computer program products) for carrying out part or all of any of the techniques described herein. Such programs embodying the present invention may be stored on computer-readable media, or could, for example, be in the form of one or more signals. Such signals may be data signals downloadable from an Internet website, or provided on a carrier signal, or in any other form.

Although the above description has referred to IEEE 802.15.4 and IEEE 802.15.6 by way of example, the invention may be applied to any type of frame-based wireless sensor network or MBAN whether or not operating in accordance with IEEE 802.15.6, as well as to other types of BAN which even if not medical body area networks nevertheless have a requirement for improved reliability of communication in emergency situations.

## Claims

1. A wireless device used as a sensor in a wireless sensor network, including:
transmission means arranged to perform a data transfer with another device in the network by sequentially receiving or transmitting one or more frames, and operable to acknowledge receipt of at least one frame from said other device by sending an acknowledgement frame; and
emergency recognising means for recognising the existence of an emergency condition with respect to the sensor; wherein
said transmission means is arranged to send the acknowledgement frame by selecting one of a plurality of frame types including an immediate acknowledgement frame; and said emergency recognising means, upon recognising said emergency state, is arranged to cause the transmission means to select the immediate acknowledgement frame.

2. A wireless device used as a coordinator in a wireless sensor network of sensors, including:
transmission means arranged to perform a data transfer with a sensor in the network by sequentially receiving or transmitting one or more frames, and operable to acknowledge receipt of at least one frame from said sensor by sending an acknowledgement frame; and
emergency recognising means for recognising the existence of an emergency condition with respect to the sensor; wherein
said transmission means is arranged to send the acknowledgement frame by selecting one of a plurality of frame types including an immediate acknowledgement frame; and said emergency recognising means, upon recognising said emergency state, is arranged to cause the transmission means to select the immediate acknowledgement frame.

3. The wireless device according to claim 1 or 2 which is arranged, upon selection of the immediate acknowledgement frame, to send the immediate acknowledgement frame directly after receipt of each single frame from said other device or said sensor as the case may be.

4. The wireless device according to claim 1, 2 or 3 wherein the recognising means is responsive to an emergency state determined by the wireless device itself.

5. The wireless device according to claim 1, 2 or 3 wherein the recognising means is responsive to an emergency state determined outside the wireless device and notified to the wireless device.

6. The wireless device according to any preceding claim wherein said plurality of frame types further include a delayed acknowledgement frame and said transmission means is arranged to select said delayed acknowledgement frame when the sensor is not in the emergency state, said delayed acknowledgement frame being sent only after completion of the data transfer from said other device or said sensor and indicating a number of frames received in said data transfer.

7. The wireless device according to any preceding claim wherein each frame has a frame control field and wherein the device is arranged to select any of said frame types including the immediate acknowledgement frame by setting at least one subfield of said frame control field.

8. The wireless device according to claim 7 wherein the frame control field comprises an acknowledgement type subfield and the device is arranged to set a value thereof to denote that the current frame is an immediate acknowledgement frame.

9. The wireless device according to claim 7 or 8 wherein the frame control field further comprises an acknowledgement policy subfield and the device is arranged to set said subfield to a value denoting whether or not an acknowledgement is requested of the receipt of the current frame.

10. The wireless device according to any preceding claim wherein said plurality of frame types include a simple acknowledgement frame having no payload, and a delayed acknowledgement frame with a payload for a number of received frames.

11. A wireless sensor network of devices for monitoring an entity, each of the devices arranged to perform a data transfer with another device in the network by sequentially receiving or transmitting frames of data, and operable to acknowledge receipt of at least one frame from said other device by sending an acknowledgement frame; said devices including at least one sensor for monitoring a parameter of said entity, and a coordinator for communicating with the at least one sensor, wherein
each of the devices is arranged to send the acknowledgement frame by selecting one of a plurality of frame types including an immediate acknowledgement frame, the immediate acknowledgement frame being an acknowledgement frame sent immediately upon receipt of one frame from said other device.

12. The network according to claim 11 wherein each of the devices is responsive to a declaration of an emergency operating state of the device to select the immediate acknowledgement frame.

13. The network according to claim 11 or 12 wherein said plurality of frame types includes a delayed acknowledgement frame which is sent only after completion of a data transfer of one or more frames from said other device and which includes an indication of a number of received frames, and wherein each of the devices is arranged in a normal operating state thereof to select the delayed acknowledgement frame.

14. The network according to claim 12, used as a medical body area network monitoring a living body as said entity, wherein said declaration of the emergency operating state is made in response to a medical emergency condition of said parameter of the living body.

15. A method for monitoring an entity using a wireless sensor network of devices, each of the devices arranged to perform a data transfer with another device in the network by sequentially receiving or transmitting frames of data, and operable to acknowledge receipt of at least one frame from said other device by sending an acknowledgement frame, the method comprising:
defining a plurality of acknowledgement frames of different types including an immediate acknowledgement frame to be sent upon receipt of each individual frame of a data transfer and a delayed acknowledgement frame to be sent only after completion of the data transfer;
monitoring a parameter of said entity using one or more of the devices which is equipped with a sensor; and
selecting the type of acknowledgement frame to be used for acknowledgement of a data transfer from or to the devices equipped with a sensor, in dependence upon whether or not said parameter is in an emergency condition.

## Amended claims

### Amended claims in accordance with Rule 137(2) EPC.

**1.** A wireless network comprising a coordinator and a plurality of network devices, the coordinator and the network devices arranged for mutual communication either directly or via one or more intermediate network devices by sequentially receiving or transmitting frames of data, said coordinator and said network devices being arranged to acknowledge receipt of a frame by sending one of a plurality of acknowledgement frame types including an immediate acknowledgement frame, which is sent immediately upon receipt of one frame, and a delayed acknowledgement frame which is sent only after completion of a data transfer consisting of one or more frames; **characterised in that**
the wireless network is a wireless sensor network, said network devices including at least one network device with a sensor for monitoring a parameter of an entity and with respect to which an emergency state is capable of being declared, the network controlled by a protocol in which when the emergency state is declared, communications between the coordinator and the respective network device are completed first with receipt of each frame received or transmitted in said communications acknowledged by an immediate acknowledgement frame; whereupon communications between the coordinator and the other network devices are performed using any of the acknowledgement frame types.

**2.** The wireless network according to claim 1 wherein communications between the coordinator and the other network devices are performed using the delayed acknowledgement frame.

**3.** The wireless network according to claim 1, used as a medical body area network monitoring a living body as said entity, wherein said declaration of the emergency operating state is made in response to a medical emergency condition of said parameter of the living body.

**4.** The wireless network according to any preceding claim wherein each frame has a frame control field and wherein the coordinator and each network device are arranged to select the immediate acknowledgement frame by setting at least one subfield of said frame control field.

**5.** The wireless network according to claim 4 wherein the frame control field comprises a frame type subfield and the coordinator or network device is arranged to set at least one value thereof to denote a frame type for the immediate acknowledgement frame.

**6.** The wireless network according to claim 5 wherein the frame control field further comprises an acknowledgement policy subfield and the coordinator or network device is arranged to set said subfield to a value denoting whether or not the immediate acknowledgement is to be used.

**7.** The wireless network according to claim 6 wherein said plurality of frame types further include a delayed acknowledgement frame and the coordinator or network device is further arranged to set the frame type and/or acknowledgement policy subfields to denote the delayed acknowledgement frame.

**8.** A method of operating a wireless network comprising a coordinator and a plurality of network devices, the coordinator and the network devices mutually communicating either directly or via one or more intermediate network devices by sequentially receiving or transmitting frames of data, and acknowledging receipt of a frame by sending one of a plurality of acknowledgement frame types including an immediate acknowledgement frame, which is sent immediately upon receipt of one frame, and a delayed acknowledgement frame which is sent only after completion of a data transfer consisting of one or more frames; **characterised in that**
the method is for monitoring an entity using sensors, the wireless network being a wireless sensor network in which at least one network device has a sensor for monitoring a parameter of an entity and with respect to which an emergency state is capable of being declared, the network controlled by a protocol in which, when the emergency state is declared, communications between the coordinator and the respective network device are completed first with receipt of each frame received or transmitted in said communications acknowledged by an immediate acknowledgement frame; whereupon communications between the coordinator and the other network devices are performed using any of the acknowledgement frame types.
